# EUROPEAN PATENT APPLICATION

(11) **EP 3 587 263 A1**
(43) Date of publication of application: **01.01.2020**
(21) Application number: 19181321.1
(22) Date of filing: 19.06.2019
(51) Int. Cl.: B64C 39/02, B64C 29/02, B64C 25/04, B64C 25/06

(54) **VERTICAL TAKE-OFF AND LANDING UNMANNED AERIAL VEHICLE**

(30) Priority: 26.06.2018 US 201816018845
(71) Applicant: Honeywell International Inc., Morris Plains, NJ New Jersey 07950 (US)
(72) Inventor: KAHOU, Hugo Tou, Morris Plains, NJ 07950 (US); SHUE, Shyh Pyng, Morris Plains, NJ 07950 (US); LEI, Lei, Morris Plains, NJ 07950 (US); LI, Chao, Morris Plains, NJ 07950 (US); ZHU, Weiyun, Morris Plains, NJ 07950 (US)
(74) Representative: Houghton, Mark Phillip

(57) **Abstract**

A fixed-wing, fixed-rotor vertical-takeoff and landing (VTOL) unmanned aerial vehicle (UAV) (10) includes a fuselage (12) extending from a fore portion (14) to an aft portion (16) and defining an upper section (18) and a lower section (20), a first pair of airfoils (24A; 24B) fixedly attached to opposite sides of the fore portion (14) of the fuselage (12), and a second pair of airfoils (26A; 26B) fixedly attached to opposite sides of the aft portion (16) of the fuselage (12). The first pair of fixed airfoils (24A; 24B) may be offset relative to the second pair of fixed airfoils (26A; 26B) in the upper section-lower section direction. In some examples, the first pair of airfoils (24A; 24B) defines a first airfoil pair surface area different than a second airfoil pair surface area defined by the second pair of airfoils (26A; 26B) so the first and second pairs of airfoils generate lift that urges the VTOL UAV (10) from a substantially vertical orientation during takeoff to a more horizontal orientation during flight.

## Description

### TECHNICAL FIELD

The present disclosure relates to vertical take-off and landing unmanned aerial vehicles.

### BACKGROUND

Unmanned aerial vehicles (UAVs) are useful for many tasks, including inspection tasks such as surveying, aerial photography, scanning, two-dimensional or three-dimensional (3D) modeling and mapping, real estate surveying, and gas pipeline monitoring, and the like. UAVs may be divided into five mainstream types: tilt rotor or tilt wing, tail sitter, rotor (e.g., helicopter) or multi-rotor, compound aircraft, and fixed wing.

### SUMMARY

In some examples, the disclosure describes a vertical-takeoff and landing (VTOL) unmanned aerial vehicle (UAV) that includes a fuselage extending from a fore portion to an aft portion and defining an upper section and a lower section; a first pair of airfoils fixedly attached to opposite sides of the fore portion of the fuselage; a second pair of airfoils fixedly attached to opposite sides of the aft portion of the fuselage, wherein the first pair of fixed airfoils is offset relative to the second pair of fixed airfoils in the upper section-lower section direction; a first plurality of rotors fixedly attached to the first pair of airfoils; a second plurality of rotors fixedly attached to the second pair of airfoils; and landing supports extending aft from the aft portion of the fuselage and an aft portion of the second pair of fixed airfoils, such that the fuselage rests with the fore-aft axis extending substantially vertically when resting on the landing supports prior to takeoff and after landing.

In some examples, the disclosure describes a method that includes causing, by flight control electronics, a first plurality of rotors and a second plurality of rotors to rotate and substantially the same rotational speed to cause a vertical-takeoff and landing (VTOL) unmanned aerial vehicle (UAV) to take off from a vertical orientation. The VTOL UAV includes a fuselage extending from a fore portion to an aft portion and defining an upper section and a lower section; a first pair of airfoils fixedly attached to opposite sides of the fore portion of the fuselage; a second pair of airfoils fixedly attached to opposite sides of the aft portion of the fuselage, wherein the first pair of fixed airfoils is offset relative to the second pair of fixed airfoils in the upper section-lower section direction; the first plurality of rotors, wherein the first plurality of rotors are fixedly attached to the first pair of airfoils; the second plurality of rotors, wherein the second plurality of rotors fixedly attached to the second pair of airfoils; and landing supports extending aft from the aft portion of the fuselage and an aft portion of the second pair of fixed airfoils, such that the fuselage rests with the fore-aft axis extending substantially vertically when resting on the landing supports prior to takeoff and after landing. The method also includes causing, by the flight control electronics, the second plurality of rotors to rotate faster than the first plurality of rotors to cause the VTOL UAV to transition to a horizontal flight orientation.

The details of one or more examples are set forth in the accompanying drawings and the description below. Other features, objects, and advantages will be apparent from the description and drawings, and from the claims.

### BRIEF DESCRIPTION OF THE FIGURES

FIG. 1 is an isometric view of an example vertical-takeoff and landing (VTOL) unmanned aerial vehicle (UAV) that includes two pairs of fixed wings and landing supports extending aft from an aft portion of the fuselage.
FIGS. 2A and 2B are a side view and a top view of an example VTOL UAV illustrating the yaw damping effect of a vertical tail.
FIG. 3 is a conceptual diagram illustrating a view of landing supports of an example VTOL UAV.
FIG. 4 is a conceptual diagram illustrating a view of an example VTOL UAV including control surfaces on airfoils of the VTOL UAV.
FIG. 5A and 5B are conceptual diagrams illustrating a view of an example VTOL UAV in a disassembled state and the disassembled VTOL UAV in a carrying case.
FIGS. 6A and 6B are conceptual diagrams illustrating example electronic components and payloads of an example VTOL UAV.
FIGS. 7A-7D are conceptual diagrams illustrating relative rotational rates of a plurality of rotors of a VTOL UAV to accomplish selected flight maneuvers in vertical flight orientation.
FIGS. 8A-8D are conceptual diagrams illustrating relative rotational rates of a plurality of rotors of a VTOL UAV to accomplish selected flight maneuvers in horizontal flight orientation.
FIG. 9 is a conceptual diagram illustrating sequential views of an example VTOL UAV during vertical take-off.
FIG. 10 is a conceptual diagram illustrating sequential views of an example VTOL UAV during controlled landing.
FIG. 11 is a conceptual diagram illustrating sequential views of an example VTOL UAV during an uncontrolled landing while operating in vertical flight orientation.
FIG. 12 is a conceptual diagram illustrating sequential views of an example VTOL UAV during an uncontrolled landing while operating in horizontal flight orientation.

### DETAILED DESCRIPTION

The disclosure describes a vertical-takeoff and landing (VTOL) unmanned aerial vehicle (UAV) that includes fixed airfoils and fixed rotors. The VTOL UAV may be a tail sitter, i.e., may be configured to takeoff and land from a position resting on a tail of the VTOL UAV with a fuselage of the VTOL UAV oriented substantially vertical (e.g., vertical or more vertical than horizontal), then transition to the fuselage being substantially horizontal (e.g., horizontal or more horizontal than vertical) during horizontal flight. The VTOL UAV may accomplish this transition from vertical to horizontal orientation without rotation of the airfoils relative to the fuselage or rotation of the orientation of the rotors relative to the airfoils or the fuselage. In this way, the VTOL UAV may be mechanically simpler than tilt rotor and tilt wing vehicles, reducing structural weight and facilitating flight stability control. Because the airfoils generate lift during horizontal flight, the VTOL UAV may be more aerodynamically efficient than a multi-rotor UAV, which may allow longer duration flights with similar power provision and greater payload capacity. Further, by enabling VTOL, the VTOL UAV may allow take-off and landing in smaller areas than fixed wing aircraft that do not enable VTOL.

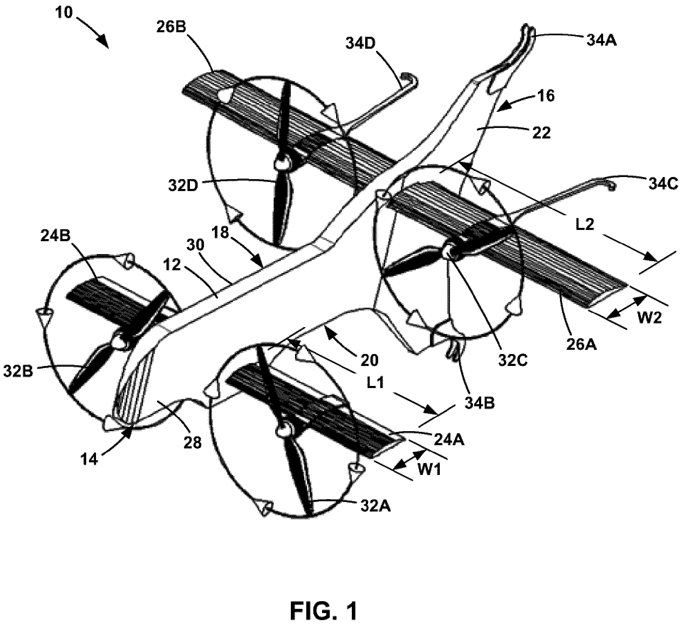

FIG. 1 is an isometric view of an example vertical-takeoff and landing VTOL UAV 10 that includes two pairs of fixed wings and landing supports extending aft from an aft portion of the fuselage 12.

VTOL UAV 10 includes a fuselage 12 that extends from a fore portion 14 to an aft portion 16. Fore portion 14 may also be referred to as a nose and aft portion 16 also may be referred to as a tail. Fuselage 12 also defines an upper section 18 and a lower section 20. In some examples, fuselage 12 may be a bladed fuselage in which the fuselage includes a relatively small width compared to the length and height of the fuselage. A bladed fuselage may reduce drag compared to a circular or elliptical fuselage, may concentrate fuselage force in a smaller area, may facilitate assembly of VTOL UAV 10, may simplify arrangement of a center of gravity and aerodynamic center of VTOL UAV 10, or combinations thereof.

In some examples, fuselage 12, and more particularly aft portion 16, includes an integral vertical stabilizer 22. Integral vertical stabilizer 22 may extend in the upper-lower direction (e.g., a direction defined as extending substantially perpendicular to the longitudinal axis extending from fore portion 14 to aft portion 16 of the VTOL UAV 10 and in a direction substantially parallel to direction between the upper section 18 and lower section 20) upward, downward, or both relative to the remainder of fuselage 12. In the example of FIG. 1, integral vertical stabilizer 22 extends both upward and downward relative to the remainder of fuselage 12. Integral vertical stabilizer 22 may act as a yaw damper to reduce unexpected or unintended heading changes, e.g., when VTOL UAV 10 is in a sideslip current.

VTOL UAV 10 also includes a first pair of airfoils 24A and 24B (collectively, "first pair of airfoils 24") and a second pair of airfoils 26A and 26B (collectively, "first pair of airfoils 26"). First pair of airfoils 24 are fixedly attached to opposite sides of fore portion 14 of fuselage 12 and second pair of airfoils 26 are fixedly attached to opposite sides of aft portion 16 of fuselage 12. For example, first airfoil 24A is fixedly attached to a first side 28 of fuselage 12 at a location toward lower section 20 of fore portion 14. Second airfoil 24B is fixedly attached to a second side 30 of fuselage 12 at a location toward lower section 20 of fore portion 14. Third airfoil 26A is fixedly attached to first side 28 of fuselage 12 at a location toward upper section 18 of aft portion 16. Fourth airfoil 26B is fixedly attached to second side 30 of fuselage 12 at a location toward upper section 18 of aft portion 16. As used herein "fixedly attached" means that the component does not rotate relative to the component to which it is attached during use, in contrast to a tilt-wing or tilt-rotor aircraft. Hence, airfoils 24A, 24B, 26A, and 26B do not rotate around their respective longitudinal axes during operation of VTOL UAV 10. Components that are fixedly attached to another component may be removable from the component to which they are fixedly attached, e.g., to facilitate transportation of VTOL UAV 10.

In some examples, rather than first pair of airfoils 24 being fixedly attached to fuselage 12 toward lower section 20 of fore portion 14 and second pair of airfoils 26 being fixedly attached to fuselage 12 toward upper section 18 of aft portion 16, first pair of airfoils 24 may be fixedly attached to fuselage toward upper section 18 of fore portion 14 and second pair of airfoils 26 may be fixedly attached to fuselage toward lower section 20 of aft portion 16. In either case, first pair of airfoils 24 is offset in the upper section-lower section direction from second pair of airfoils 26.

In some examples, second pair of airfoils 26 may have a larger aerodynamic surface than first pair of airfoils 24, such that second pair of airfoils 26 produce more lift than first pair of airfoils 24. For example, first airfoil 24A and second airfoil 24B may each define a first length, L1, and third airfoil 26A and fourth airfoil 26B may each define a second length, L2. Similarly, first airfoil 24A and second airfoil 24B may each define a first width W1, and third airfoil 26A and fourth airfoil 26B may each define a second width, W2. In some examples, the second length, L2, may be greater than the first length, L1, and widths W1 and W2 may be substantially the same such that second pair of airfoils 26 has a larger aerodynamic surface than first pair of airfoils 24. In other examples, the second width, W2, may be greater than the first width, W1, and the lengths L1 and L2 may be substantially the same such that second pair of airfoils 26 has a larger aerodynamic surface than first pair of airfoils 24. In other examples, the second length, L2, may be greater than the first length, L1, and the second width, W2, may be greater than the first width, W1 such that second pair of airfoils 26 has a larger aerodynamic surface than first pair of airfoils 24. By having second pair of airfoils 26 produce more lift than first pair of airfoils 24, VTOL UAV 10 may facilitate the transition from vertical flight orientation (e.g., helicopter mode) to horizontal flight orientation (e.g., airplane mode).

Further, configuring second pair of airfoils 26 to produce more lift during horizontal flight facilitates adjustment of the aerodynamic center of VTOL UAV 10 with respect to the center of gravity of VTOL UAV 10. This may increase flight stability of VTOL UAV 10 during horizontal flight. Additionally, this may enable greater flexibility of positioning of cameras and other payloads between first pair of airfoils 24 and second pair of airfoils 26, payloads may move with less impact on flight performance (e.g., cameras mounted to gimbals or the like).

The airfoils of first pair of airfoils 24 and second pair of airfoils 26 may be mounted to fuselage 12 at any selected angle, and the respective angles may be the same or different. For example, the mounting angle of first pair of airfoils 24 may be several degrees different (e.g., between about 2 and about 8 degrees different) than the mounting angle of second pair of airfoils 26. The installation angle of airfoils 24 and 26 may affect flight performance, stability, and quality.

Each airfoil of first pair of airfoils 24 and each airfoil of second pair of airfoils 26 includes at least one respective rotor attached thereto. For example, a first rotor 32A is attached to first airfoil 24A, a second rotor 32B is attached to second airfoil 24B, a third rotor 32C is attached to third airfoil 26A, and a fourth rotor 32D is attached to fourth airfoil 26B. In some examples, each of rotors 32A, 32B, 32C, and 32D (collectively, "rotors 32") may include a respective motor or power source and a respective propulsor (e.g., a propeller). The respective motors or power sources may be fixedly attached to the respective airfoils. The respective propulsors may rotate around their respective central axis, but may be otherwise fixedly attached to the respective motor or power source, and thus, fixedly attached to the respective airfoil. In other words, rotors 32 do not rotate to reposition their thrust direction relative to the respective airfoil to which the respective rotor is attached, in contrast to a tilt rotor aircraft. The mounting angle of rotors 32 with respect to the level of airfoils 24 and 26 may be perpendicular or several degrees off the perpendicular.

As shown in FIG. 1, in some examples, the propulsors of rotors 32 contra-rotate relative to the rotor next to and behind the rotor to generate the same thrust direction with opposite pitch angels. For example, first rotor 32A may rotate clockwise when viewed from the front of fuselage 12, second rotor 32B may rotate counterclockwise when viewed from the front of fuselage 12, third rotor 32C may rotate counterclockwise when viewed from the front of fuselage 12, and fourth rotor 32D may rotate clockwise when viewed from the front of fuselage 12. In other examples, the rotational directions of rotors 32 may be different than that illustrated in FIG. 1.

Although FIG. 1 illustrates VTOL UAV 10 as including a single rotor attached to each respective airfoil, in other examples, VTOL UAV 10 may include more or fewer rotors. In general, VTOL UAV 10 may include at least one rotor attached to each respective airfoil. VTOL UAV 10 may include the same number of rotors attached to each airfoil, or may include different numbers of rotors attached to different airfoils (e.g., one respective rotor attached to each of first airfoil 24A and second airfoil 24B and two respective rotors attached to each of third airfoil 26A and fourth airfoil 26B).

VTOL UAV 10 may be a tail sitter aircraft and includes landing supports 34A-34D (collectively, "landing supports 34"). Landing supports 34 may be attached to aft portion 16 of fuselage 12, aft portions of second pair of airfoils 26, or both. For example, as shown in FIG. 1, a first landing support 34A is attached to upper section 18 of aft portion 16 of fuselage 12 (e.g., at an upper end or tip of integral vertical stabilizer 22) and a second landing support 34B is attached to lower section 20 of aft portion 16 of fuselage 12 (e.g., at a lower end or tip of integral vertical stabilizer 22). Additionally, a third landing support 34C is attached to an aft portion of third airfoil 26A and a fourth landing support 34D is attached to an aft portion of fourth airfoil 26B. VTOL UAV 10 including four landing supports attached to fuselage 12 and second pair of airfoils 26 as illustrated in FIG. 1 may provide support and stability to VTOL UAV 10 during take-off and landing maneuvers. In other examples, VTOL UAV 10 may include more or fewer (e.g., three or five or more) landing supports 34.

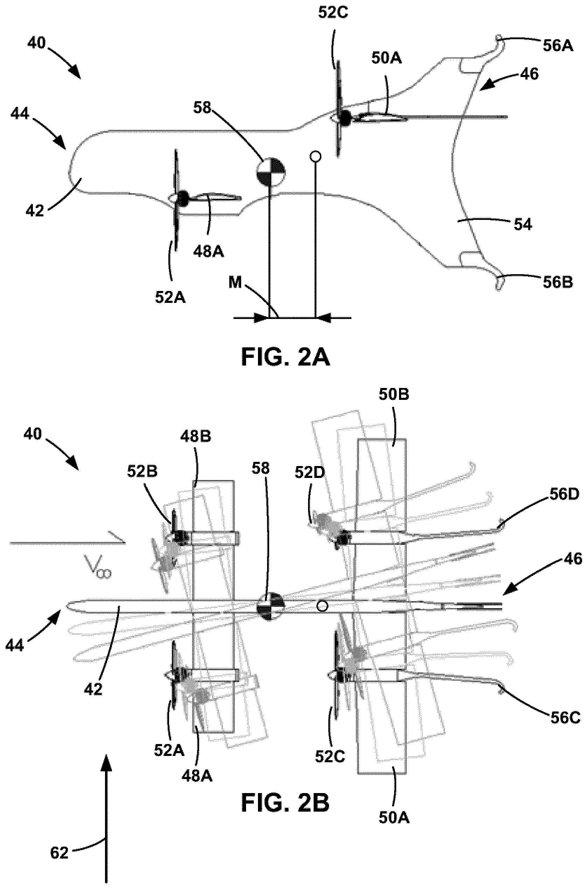

FIGS. 2A and 2B are a side view and a top view of an example VTOL UAV 40 illustrating the yaw damping effect of an integral vertical stabilizer 54 (e.g., a vertical tail). VTOL UAV 40 may be similar to or substantially the same as VTOL UAV 10 of FIG. 1, aside from any differences described herein. For example, VTOL UAV 40 includes a fuselage 42 that extends from a fore portion 44 to an aft portion 46.

VTOL UAV 40 also includes a first pair of airfoils 48 including first airfoil 48A and second airfoil 48B and a second pair of airfoils 50 including third airfoil 50A and fourth airfoil 50B. First pair of airfoils 48 are fixedly attached to a lower section of fore portion 44 of fuselage 42 and second pair of airfoils 50 are fixedly attached to an upper section of aft portion 46 of fuselage 42. A respective rotor 52A, 52B, 52C, and 52D is attached to each respective airfoil of airfoils 48A, 48B, 50A, and 50B. Further, VTOL UAV 40 includes landing supports 56A-56D.

In the example shown in FIGS. 2A and 2B, fuselage 42 includes integral vertical stabilizer 54 near or as part of aft portion 46. Integral vertical stabilizer 54 extends upward and downward relative to the remainder of fuselage 42. In other examples, integral vertical stabilizer 54 may extend only upward relative to the remainder of fuselage 42 or only downward relative to the remainder of fuselage.

Integral vertical stabilizer 54 acts as a yaw damper to reduce unexpected or unintended heading changes, e.g., when VTOL UAV 40 is in a sideslip current 62. For example, as shown in FIG. 2A, a tail moment arm, M, exists between a center of gravity 58 of VTOL UAV 40 and integral vertical stabilizer 54. As shown in FIG. 2B, integral vertical stabilizer 54 may induce a rotational force about center of gravity 58 of VTOL UAV 40 which may counteract unintended sideways motion of VTOL UAV 40 due to sideslip force or velocity created by sideward wind 62.

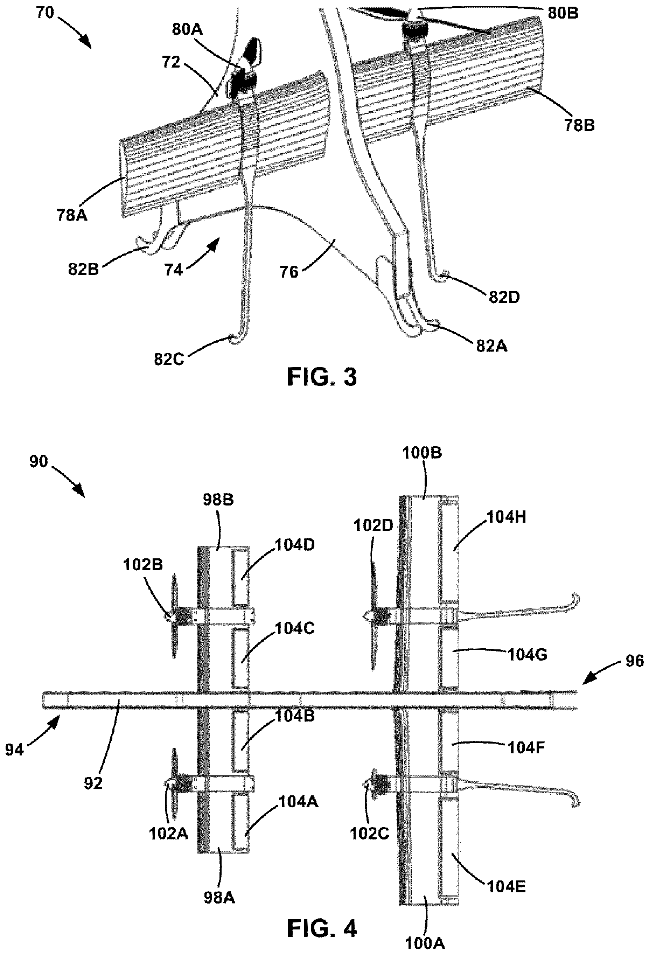

FIG. 3 is a conceptual diagram illustrating a view of landing supports 82A-82D of an example VTOL UAV 70. VTOL UAV 70 may be similar to or substantially the same as VTOL UAV 10 of FIG. 1, aside from any differences described herein. For example, VTOL UAV 70 includes a fuselage 72 that extends from a fore portion (not shown in FIG. 3) to an aft portion 76. VTOL UAV 70 also includes a second pair of airfoils 78 including first airfoil 78A and fourth airfoil 78B. Second pair of airfoils 78 are fixedly attached to an upper section of aft portion 74 of fuselage 72. A respective rotor 80A and 80B is attached to each respective airfoil of airfoils 78A and 78B.

VTOL UAV 70 includes landing supports 82A-82D (collectively, "landing supports 82"). First landing support 82A is attached to a first (e.g., top) end of integral vertical stabilizer 76, second landing support 82B is attached to a second (e.g., bottom) end of integral vertical stabilizer 76. First and second landing supports 82A and 82B extend aft from an aft end of fuselage 72. Third landing support 82C is attached to first airfoil 78A and extends aft from an aft end of first airfoil 78A. Fourth landing support 82D is attached to second airfoil 78B and extends aft from an aft end of second airfoil 78B. In this way, the aft-most portions of landing supports 82 define resting positions for VTOL UAV 70 during take-off and landing operations. In some examples, the aft-most portions of landing supports 82 terminate at a common plane that is substantially perpendicular to a longitudinal axis of VTOL UAV 70. Thus, when VTOL UAV 70 rests on a surface on landing supports 82, the longitudinal axis of VTOL UAV 70 may be oriented substantially perpendicular to the surface. The attached angles of 82C and 82D are illustrated parallel to the longitudinal axis of fuselage 76. However, this angle can be selected to be an angle other than parallel. For example, the angle can be 30 or 45 degrees outside of the airfoils 78 to provide a larger landing-supportive space.

In some examples, as shown in FIG. 3, each of landing supports 82 may include a curved shape like a skate or a sled runner. This configuration for landing supports 82 enables sliding of landing supports 82 along a surface, e.g., a landing surface or take-off surface. This may facilitate VTOL UAV 70 taking off from and landing at surface that are not perfectly flat and/or at ascent or descent angles that are not perpendicular to the surface without tipping. Landing supports 82 also may reduce a likelihood of VTOL UAV 70 tipping due to wind when resting on a surface by allowing VTOL UAV 70 to slide along the surface.

In some examples, as shown in FIG. 3, the skate or sled-runner shape of first landing support 82A and second landing support 82B may be oriented in substantially opposite directions and the skate or sled-runner shape of third landing support 82C and fourth landing support 82D may be oriented in substantially opposite directions. Further, the skate or sled-runner shape of first landing support 82A and second landing support 82B may be oriented substantially perpendicular to the skate or sled-runner shape of third landing support 82C and fourth landing support 82D. By including such an orientation of landing supports 82, VOTL UAV 70 may enable sliding in substantially any direction during landing or take-off.

In some examples, landing supports 82 may be relatively easily removable from integral vertical stabilizer 76 and airfoils 78, e.g., to allow replacement on landing supports 82 upon landing supports 82 becoming worn or damaged. In this way, landing supports 82 may be consumables and may reduce a likelihood of damage to fuselage 72 and/or airfoils 78 during landing and take-off.

FIG. 4 is a conceptual diagram illustrating a view of an example VTOL UAV 90 including control surfaces 104 on airfoils 98, 100 of the VTOL UAV 90. VTOL UAV 90 may be similar to or substantially the same as VTOL UAV 10 of FIG. 1, aside from any differences described herein. For example, VTOL UAV 90 includes a fuselage 92 that extends from a fore portion 94 to an aft portion 96.

VTOL UAV 90 also includes a first pair of airfoils 98 including first airfoil 98A and second airfoil 98B and a second pair of airfoils 100 including third airfoil 100A and fourth airfoil 100B. First pair of airfoils 98 are fixedly attached to a lower section of fore portion 94 of fuselage 92 and second pair of airfoils 100 are fixedly attached to an upper section of aft portion 96 of fuselage 92. A respective rotor 102A, 102B, 102C, and 102D is attached to each respective airfoil of airfoils 98A, 98B, 100A, and 100B.

VTOL UAV 90 also may include control surfaces 104A-104H (collectively, "control surfaces 104"). Control surfaces 104 may be included in one or more of airfoils 98, 100. In the example of FIG. 4, first airfoil 98A includes two control surfaces 104A, 104B, second airfoil 98B includes two control surfaces 104C, 104D, third airfoil 100A includes two control surfaces 104E, 104F, and fourth airfoil 100B includes two control surfaces 104G, 104H. In other examples, airfoils 98 and 100 may include different numbers of control surfaces 104 (e.g., each airfoil of airfoils 98 and 100 may include a single respective control surface) or some of airfoils 98 and 100 may omit control surfaces 104.

Control surfaces 104 may include any moveable structures configured to affect airflow around airfoils 98 or 100 to change attitude or orientation of VTOL UAV 90. For example, control surfaces 104 may include ailerons, spoilers, slats, flaps, elevators, or the like. In some examples, each of control surfaces 104 is located at an aft edge of a respective airfoil of airfoils 98 or 100 and is an aileron, flap, or elevator. Control surfaces 104 may facilitate attitude trimming of VTOL UAV 90 in both the vertical flight orientation (e.g., helicopter mode) and the horizontal flight orientation (e.g., airplane mode). Control surfaces 104 also may enhance the authority of mode transitions (e.g., from vertical flight orientation (e.g., helicopter mode) and the horizontal flight orientation (e.g., airplane mode) or vice versa. Since RPM control of the four rotors attached to airfoils 98 and 100 may provide sufficient flight control for VTOL UAV 90 from helicopter mode to airplane mode, control surfaces 104 may be used to provide dual redundancy management or may allow VTOL UAV 90 to operate with fixed RPM rotors.

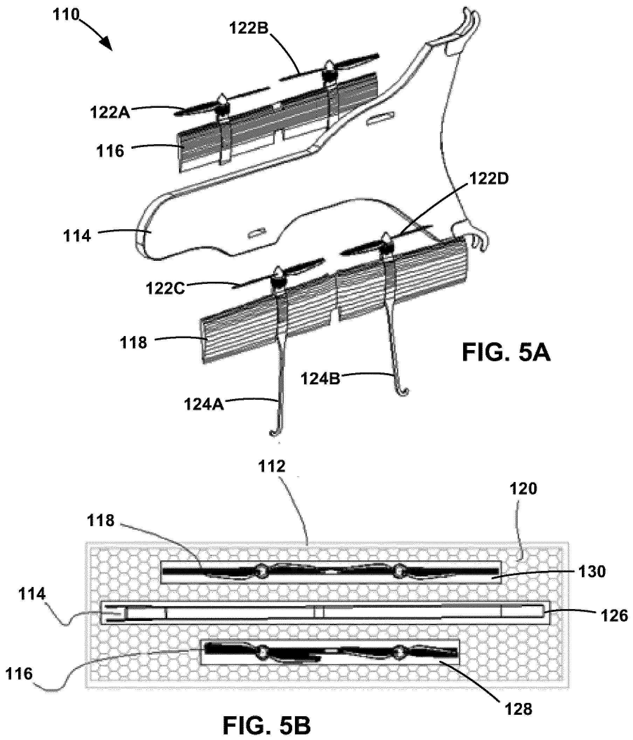

In some examples, a VTOL UAV as described herein may be disassembled for transportation. FIG. 5A and 5B are conceptual diagrams illustrating a view of an example VTOL UAV 110 in a disassembled state and the disassembled VTOL UAV 110 in a carrying case 112, respectively. As shown in FIG. 5A, in some examples, VTOL UAV 110 may be disassembled into three parts: fuselage 114, first pair of airfoils 116, and third pair of airfoils 118. In some implementations, the airfoils of first pair of airfoils 116 may be integral with each other and the airfoils of second pair of airfoils 118 may be integral with each other. Further, first and second rotors 122A and 122B may be integral with first pair of airfoils 116 and third and fourth rotors 122C and 122D may be integral with second pair of airfoils 118. Similarly, first and second landing supports 124A and 124B may be integral with second pair of airfoils 118.

In other implementations, VTOL UAV 110 may be further disassembled. For example, rather than the airfoils of first pair of airfoils 116 being integral, the airfoils of first pair of airfoils 116 may be physically separate from each other. Similarly, rather than the airfoils of second pair of airfoils 118 being integral, the airfoils of first pair of airfoils 118 may be physically separate from each other. In some examples, rotors 122 may be removable from airfoils 116, 118, or landing supports 124A and 124B may be removable from second pair of airfoils 118. In general, VTOL UAV 110, which may be any of the VTOL UAVs described herein, including VTOL UAV 10, 40, 70, or 90, may be separable into two or more parts to facilitate transport of VTOL UAV 110.

In some examples, a transport system may include a carrying case with padding and cavities specially made for VTOL UAV 110 when disassembled. For example, FIG. 5B illustrates an example carrying case 112 that includes internal padding 120 that defines cavities 126, 128, 130 that substantially conform to the shapes of fuselage 114, first pair of airfoils 116, and second pair of airfoils 118, respectively. The internal padding 120 and cavities 126, 128, 130 may reduce a chance of damage to VTOL UAV 110 during transport. For example, internal padding 120 may act as a vibration absorbing material. In examples in which VTOL UAV 110 is disassembled into more parts, carrying case 112 may include padding 120 that defines additional cavities, e.g., one specially shaped cavity for each respective part into which VTOL UAV 110 is disassembled.

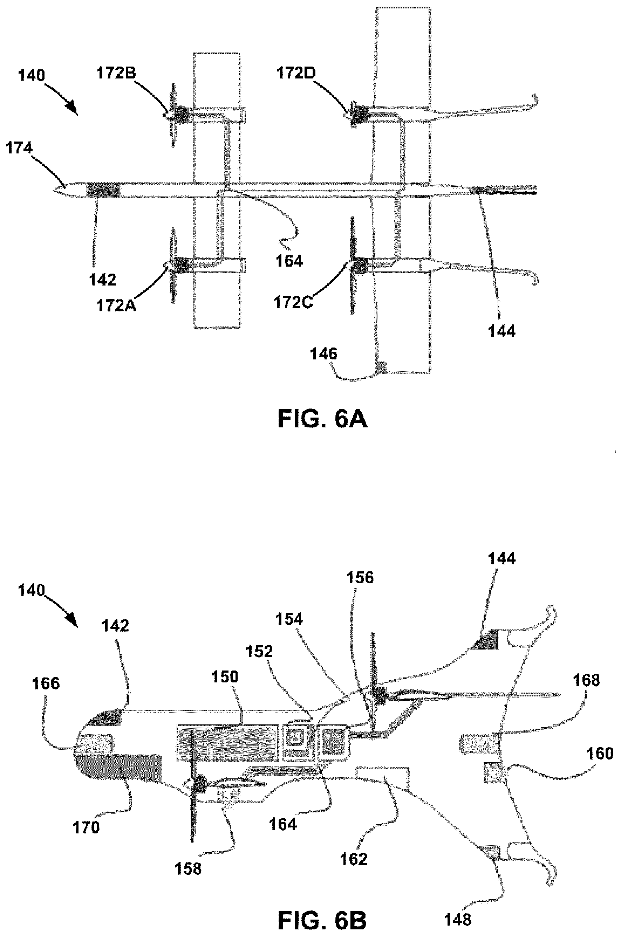

FIGS. 6A and 6B are conceptual diagrams illustrating example electronic components and payloads of an example VTOL UAV 140. In general, VTOL UAV 140 may be any of the VTOL UAVs described herein, including VTOL UAV 10, 40, 70, 90, or 110. FIG. 6A is a top view of VTOL UAV 140 and FIG. 6B is a side view of VTOL UAV 140. For example, VTOL UAV 140 may include a primary GPS antenna 142, a secondary GPS antenna 144, a primary compass 146, a secondary compass 148, a battery 150, an inertial measurement unit (IMU) 152, flight control electronics 154, actuation control electronics 156, either a pair of a front camera 158, and a rear camera 160, or a center camera, a telemetry module 162, wiring 164, a front parachute 166, a rear parachute 168, and a payload 170. In other examples, VTOL UAV 140 may include more or fewer components. For example, VTOL UAV 140 may include only one GPS antenna, only one compass, only one camera, only one parachute, or the like, or omit a payload, or may integrate all electronics into a single system on a chip.

Battery 150 is a power source that provides electrical energy for powering operation of electronic components of VTOL UAV 140 including, for example, primary GPS antenna 142, secondary GPS antenna 144, IMU 152, flight control electronics 154, actuation control electronics 156, telemetry module 162, and rotors 172A-172D (collectively, "rotors 172"). Battery 150 may include any suitable battery chemistry, such as, for example, lithium ion, lithium-oxygen, lithium-air, alkaline, oxy nickel hydroxide, nickel metal hydride, or the like.

Battery 150 is connected to the various electrical components of VTOL UAV 140 with wiring 164. Wiring 164 may be internal to fuselage 174 or mounted to a surface of fuselage 174. Wiring 164 may include wiring harnesses, electrical traces on flexible dielectric substrates, or the like. In addition to conducting power to the various electrical components of VTOL UAV 140, wiring 164 may include conductors dedicated to control and communication signals. In some examples, battery 150 accounts for a relatively large portion (e.g., about 40%) of the weight of VTOL UAV 140, so battery 150 may be located on or within fuselage 174 near a desired position of the center of gravity.

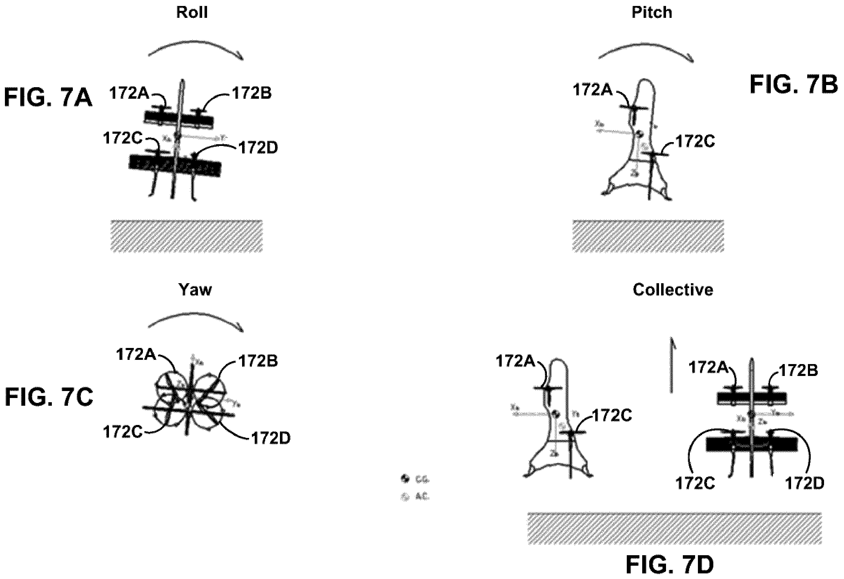

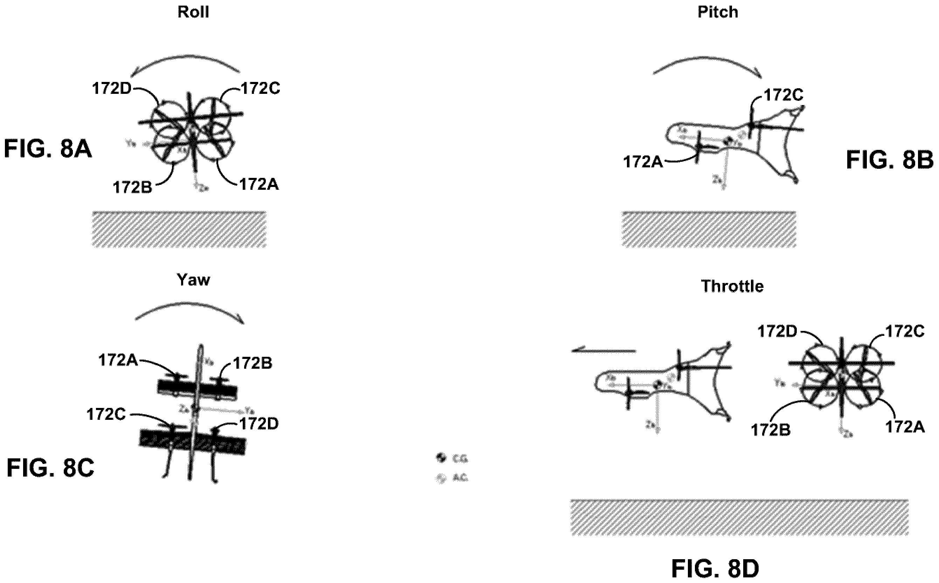

Flight control electronics 154 control overall operation of VTOL UAV 140, e.g., take-off, landing, transition between vertical and horizontal flight orientation and vice versa, and the like. Flight control electronics 154 may receive signals from other components, e.g., primary GPS antenna 142, secondary GPS antenna 144, IMU 152, actuation control electronics 156, front camera 158, rear camera 160, telemetry module 162, or the like, and control operation of various components of VTOL UAV 140, e.g., rotors 172, control surfaces (not shown in FIGS. 6A and 6B), or the like, to achieve desired flight maneuvers. In some examples, flight control electronics 154 may be programmed with flight control algorithms, such as algorithms to accomplish the flight maneuvers described with references to FIGS. 7A-7D and 8A-8D. Flight control electronics 154 may be implemented as one or more processors (e.g., microprocessors, central processing units, field programmable gate arrays (FPGAs), application specific integrated circuits (ASICs), or the like) programmed with, implementing, or executing firmware or software to accomplish the functions ascribed to flight control electronics 154.

In some examples, VTOL UAV 140 may include multiple, redundant flight control electronics 154. For example, VTOL UAV 140 may include two or three redundant instances of flight control electronics 154. In some examples, one or more instances of flight control electronics 154 may include an internal battery, which may provide sufficient power for one or more emergency functions (e.g., deploying one or both of parachutes 166 or 168) in event of loss of power from battery 150.

IMU 152 represents various components that together measure motion of VTOL UAV 140 in three orthogonal axes (e.g., pitch, roll, and yaw). IMU 152 may include one or more accelerometers, one or more gyroscopes, one or more magnetometers, or the like. IMU 152 may provide signals to flight control electronics 154, which may use the signals from IMU 152 to determine orientation and heading of VTOL UAV 140.

Flight control electronics 154 also may receive signals from one or more of primary GPS antenna 142, secondary GPS antenna 144, primary compass 146, or secondary compass 148. Together with the signals from IMU 152, flight control electronics 154 may use the signals from the one or more of primary GPS antenna 142, secondary GPS antenna 144, primary compass 146, or secondary compass 148 to establish orientation and heading of VTOL UAV 140.

Flight control electronics 154 may communicate control signals to actuation control electronics 156 and rotors 172 based on the flight control logic and the signals received from primary GPS antenna 142, secondary GPS antenna 144, primary compass 146, or secondary compass 148, and/or IMU 152. Actuation control electronics 156 may receive the control signals and control actuation of any control surfaces (not shown in FIGS. 6A and 6B) to accomplish changes in attitude, transitions between vertical and horizontal flight orientations, or the like. Similarly, rotors 172 may control relative rotation rates based on control signals from flight control electronics 156 to accomplish changes in attitude, transitions between vertical and horizontal flight orientations, or the like.

In addition to potentially being used for navigation, front camera 158 and rear camera 160 may be used to acquire images as part of the mission of VTOL UAV 140, may be part of a collision avoidance system, collecting images used by flight control electronics 156 to support collision avoidance, or both. For example, VTOL UAV 140 may be used to inspect or monitor various locations and front camera 158 and rear camera 160 may capture images of the locations that may be stored by a computer memory carried by VTOL UAV 140 (e.g., as part of flight control electronics 154) or transmitted wirelessly via telemetry module 162 to an external computing system. Front camera 158 and rear camera 160 may include any suitable image sensor and associated optical components to allow capture of still images, video images of any wavelength of light, e.g., visible, IR, UV, or the like. In some examples, rather than including front camera 158 and rear camera 160, VTOL UAV 140 may include a single camera mounted near a longitudinal center of fuselage 174. In some examples the single camera or cameras 158 and 160 may be mounted on a gimbal or other actuator to allow movement of the camera or cameras 158 and 160 relative to fuselage 174.

Telemetry module 162 includes electronics and one or more antennae to facilitate wireless communication between VTOL UAV 140 and remote computing systems. For example, telemetry module 162 may include radio frequency electronics and an associated antenna for communication using any suitable communications protocol, such as a cellular communications protocol (e.g., 3G, 4G, 5G, or combinations thereof), to allow exchange of data and/or control signals with a remove computing system. In some examples, VTOL UAV 140 may include multiple telemetry modules. The multiple telemetry modules may be dedicated to respective communications protocols, may provide redundancy in the event of loss or malfunction of one of the telemetry modules, or combinations thereof.

VTOL UAV 140 also may include an optional payload 170. Payload 170 may include, for example, a gas detector payload for pipeline inspection, a search and rescue kit configured to be released to the rescue area during a search and rescue mission. The rescue kit may include, for example, a bottle of water, a bag of food, and a GPS transmitter which transmit the rescuee's position. In some examples, payload 170 may include an analytical tool kit to monitor environmental conditions of the UAV flight location.

VTOL UAV 140 also may include a front parachute 166 and a rear parachute 168. Front parachute 166 is installed near a nose of fuselage 174 and rear parachute 168 is installed near a tail of fuselage 174. Front parachute 166 and rear parachute 168 may be used as part of uncontrolled landings, e.g., in event of loss of power or control of VTOL UAV 140. In some examples, front parachute 166 may be deployed in event of an uncontrolled landing while VTOL UAV 140 is operating in a vertical flight orientation (e.g., helicopter mode) and rear parachute 168 may be deployed in even of an uncontrolled landing while VTOL UAV 140 is operating in a horizontal flight orientation (e.g., airplane mode).

As described above, flight control electronics 154 may control operation of rotors 172 to control flight maneuvers of VTOL UAV 140. FIGS. 7A-7D are conceptual diagrams illustrating relative rotational rates of a plurality of rotors 172 to accomplish selected flight maneuvers in vertical flight orientation (e.g., helicopter mode). VTOL UAV 140 (e.g., flight control electronics 154) may be configured to operate in vertical flight orientation (e.g., helicopter mode) during low-speed flying and for loiter applications. FIGS. 7A-7D will be described with reference to VTOL UAV 140 of FIGS. 6A and 6B for ease of reference, but it will be understood that any of the VTOL UAVs described herein may operate similarly.

FIG. 7A illustrates a roll maneuver while VTOL UAV 140 is operating in vertical flight orientation (e.g., helicopter mode). To accomplish the roll maneuver, flight control electronics 154 may control rotors 172A and 172C to rotate relatively faster than rotors 172B and 172D. To accomplish a pitch maneuver, illustrated in FIG. 7B, flight control electronics 154 may control rotors 172A and 172B to rotate relatively faster and rotors 172C and 172D to rotate relatively slower. To accomplish a yaw maneuver, as illustrated in FIG. 7C, flight control electronics 154 may control rotors 172B and 172C to rotate relatively faster and rotors 172A and 172D to rotate relatively slower. Finally, to accomplish a collective maneuver, as illustrated in FIG. 7D, flight control electronics 154 may control all of rotors 172 to rotate relatively faster. A summary of the control operations to accomplish these flight maneuvers in vertical flight orientation (e.g., helicopter mode) is presented in Table 1. Table 1 includes rotor-control-only flight maneuvers. In examples in which VTOL UAV 140 includes control surfaces, the control surfaces may be used to supplement or provide redundancy for the flight maneuvers.

**Table 1: Flight Maneuvers in Vertical Flight Orientation**

| | Rotor 172A | Rotor 172B | Rotor 172C | Rotor 172D |
|---|---|---|---|---|
| Roll | + | - | + | - |
| Pitch | + | + | - | - |
| Yaw | - | + | + | - |
| Collective | + | + | + | + |

FIGS. 8A-8D are conceptual diagrams illustrating relative rotational rates of plurality of rotors 172 to accomplish selected flight maneuvers in horizontal flight orientation (e.g., airplane mode). VTOL UAV 140 (e.g., flight control electronics 154) may be configured to operate in horizontal flight orientation (e.g., airplane mode) during high-speed flying, during long distance missions, and during cruising. FIGS. 8A-8D will be described with reference to VTOL UAV 140 of FIGS. 6A and 6B for ease of reference, but it will be understood that any of the VTOL UAVs described herein may operate similarly.

FIG. 8A illustrates a roll maneuver while VTOL UAV 140 is operating in horizontal flight orientation (e.g., airplane mode). To accomplish the roll maneuver, flight control electronics 154 may control rotors 172A and 172D to rotate a different speed than rotors 172B and 172C. To accomplish a pitch maneuver, illustrated in FIG. 7B, flight control electronics 154 may control rotors 172A and 172B to rotate a different speed than rotors 172C and 172D. To accomplish a yaw maneuver, as illustrated in FIG. 7C, flight control electronics 154 may control rotors 172A and 172C to rotate a different speed than rotors 172B and 172D. Finally, to accomplish a throttle maneuver, as illustrated in FIG. 7D, flight control electronics 154 may control all of rotors 172 to rotate relatively faster. A summary of the control operations to accomplish these flight maneuvers in horizontal flight orientation (e.g., airplane mode) is presented in Table 2. Table 2 includes rotor-control-only flight maneuvers. In examples in which VTOL UAV 140 includes control surfaces, the control surfaces may be used to supplement or provide redundancy for the flight maneuvers.

**Table 2: Flight Maneuvers in Horizontal Flight Orientation**

| | Rotor 172A | Rotor 172B | Rotor 172C | Rotor 172D |
|---|---|---|---|---|
| Roll | + | - | - | + |
| Pitch | + | + | - | - |
| Yaw | + | - | + | - |
| Throttle | + | + | + | + |

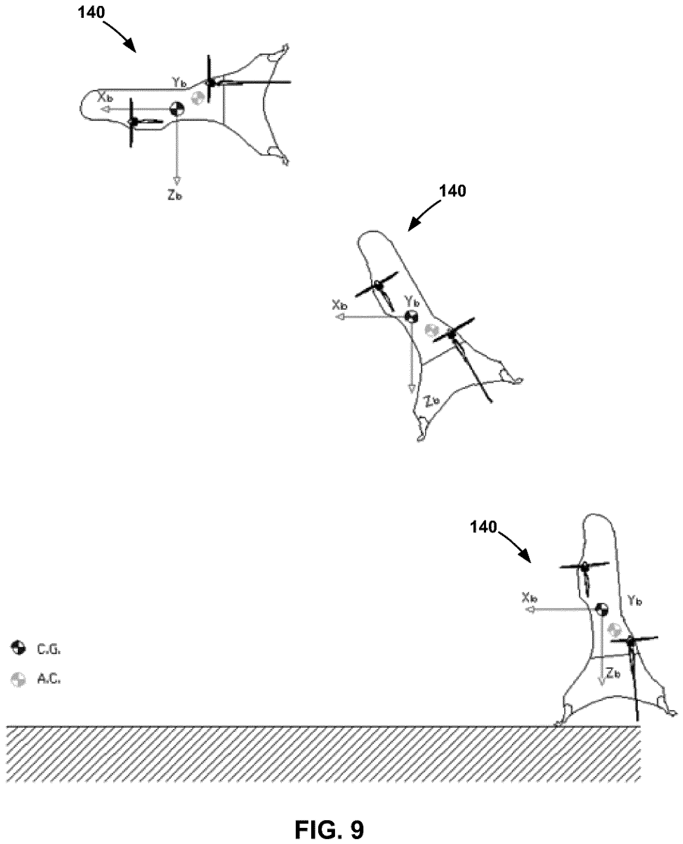

FIG. 9 is a conceptual diagram illustrating sequential views (from right to left) of an example VTOL UAV 140 during vertical take-off. FIG. 9 will be described with reference to VTOL UAV 140 of FIGS. 6A and 6B for ease of reference, but it will be understood that any of the VTOL UAVs described herein may operate similarly. As shown in the right-most position in FIG. 9, VTOL UAV 140 is initially resting on landing supports (not labelled in FIG. 9) with fuselage 174 oriented substantially vertically (e.g., the fore portion of fuselage 174 is substantially vertically above the aft portion of fuselage 174). During vertical take-off, flight control electronics 154 may cause rotors 172 rotate substantially the same speed to accomplish a collective maneuver, causing VTOL UAV 140 to ascend in a generally vertical direction. As shown in FIG. 9, in some examples, the center of gravity of VTOL UAV 140 is located in a direction more towards a fore portion of fuselage 174 and a lower section of fuselage 174 than an aerodynamic center of VTOL UAV 140.

As VTOL UAV 140 ascends during take-off, VTOL UAV 10 may transition from a vertical flight orientation (e.g., helicopter mode) through a transition mode to a horizontal flight orientation (e.g., airplane mode). The transition may be accomplished by flight control electronics 154 controlling rotors 172C and 172D to rotate faster than rotors 172A and 172B. This causes differential thrust between rotors 172C and 172D (greater thrust) and rotors 172A and 172B (lesser thrust), which causes fuselage 174 to pitch downwards. During this maneuver, the projection of the aerodynamic center of VTOL UAV 140 along the longitudinal axis of fuselage 172 will move backward to a position aft of the center of gravity of VTOL UAV 140. This contributes to stability of the longitudinal phugoid mode. At the same time, the thrust generated by all rotors 172 accelerates VTOL UAV 140 horizontally and the airfoils generate lift to balance the force of gravity for level flight. This may enable rotors 172 to be rotated more slowly (e.g., compared to a multi-rotor aircraft that relies on the rotors for all lift and propulsion) or even idled during horizontal flight. VTOL UAV 140 may fly in the horizontal flight orientation (e.g., airplane mode) to travel from location to location, e.g., during cruising or long-range flight.

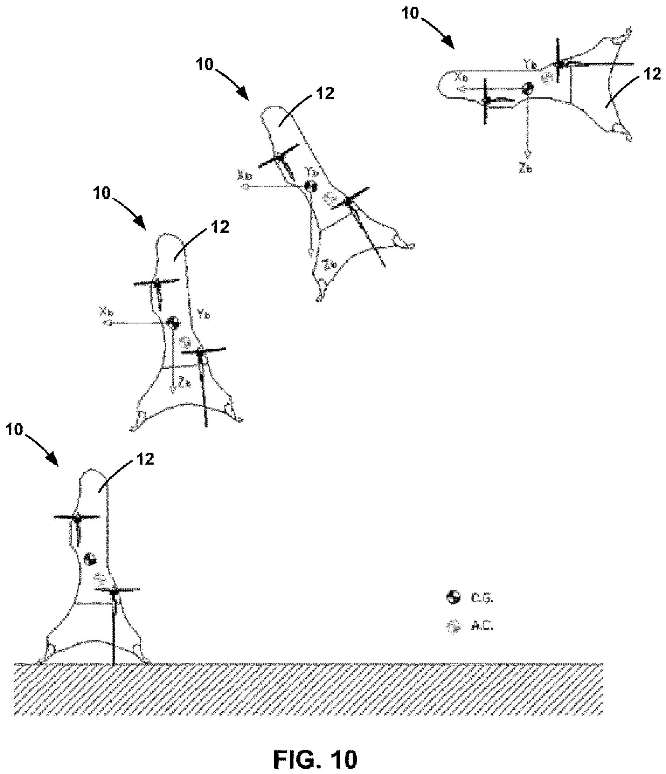

FIG. 10 is a conceptual diagram illustrating sequential views (from right to left) of an example VTOL UAV 140 during controlled landing. FIG. 10 will be described with reference to VTOL UAV 140 of FIGS. 6A and 6B for ease of reference, but it will be understood that any of the VTOL UAVs described herein may operate similarly. During controlled landing, VTOL UAV 140 may convert from a horizontal flight orientation (e.g., airplane mode) to a vertical flight orientation (e.g., helicopter mode). To convert from the horizontal flight orientation (e.g., airplane mode) to the vertical flight orientation (e.g., helicopter mode), flight control electronics 154 may cause rotors 172A and 172B to rotate faster than rotors 172C and 172D. This causes fuselage 174 to pitch up to the vertical flight orientation (e.g., helicopter mode), e.g., by the fore portion of fuselage 174 rotating up and back relative to the aft portion of fuselage 174, which rotates down and forward relative to the fore portion. Once fuselage 174 pitches up to the vertical flight orientation (e.g., helicopter mode), all rotors 172A-172D may be rotated at a substantially similar rate to generate balanced vertically directed thrust for hovering and descending. In addition to landing and take-off, VTOL UAV 140 may operate in the vertical flight orientation (e.g., helicopter mode) to hover or loiter over a selected location.

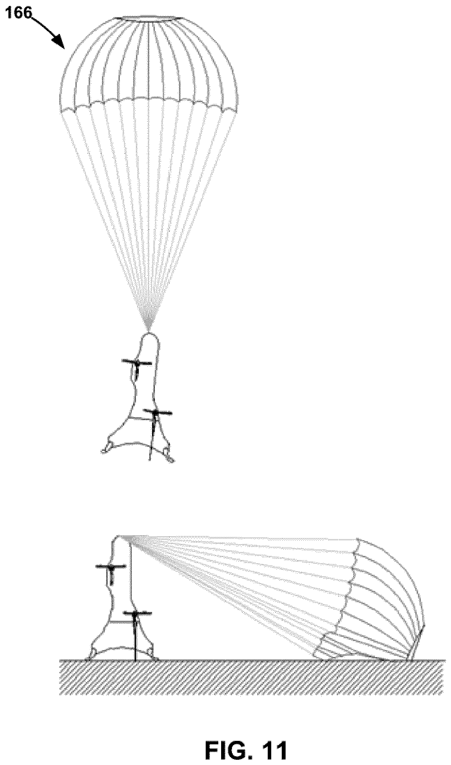

FIG. 11 is a conceptual diagram illustrating sequential views of an example VTOL UAV during an uncontrolled landing while operating in vertical flight orientation. As shown in FIG. 11, front parachute 166 may be deployed in the event of an uncontrolled landing while operating in vertical flight orientation, and the VTOL UAV may land on its landing supports in an upright position.

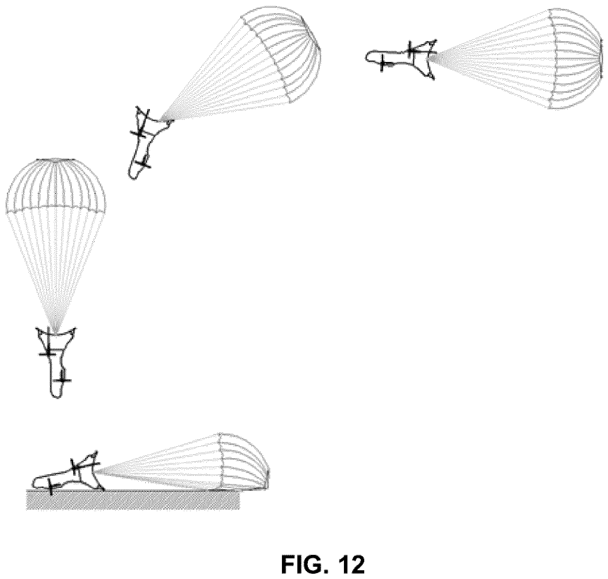

FIG. 12 is a conceptual diagram illustrating sequential views of an example VTOL UAV during an uncontrolled landing while operating in horizontal flight orientation. As shown in FIG. 12, rear parachute 168 may be deployed in the event of an uncontrolled landing while operating in vertical flight orientation. The VTOL UAV may be slowed by the parachute and land on its nose, then fall to a side of the fuselage. In some examples, flight control electronics 154 may implement an algorithm to determine whether the VTOL UAV is in helicopter mode, aircraft mode, or a transition mode to determine whether to deploy front parachute 166 or rear parachute 168 in response to loss of power or malfunction of a component of the VTOL UAV.

Various examples have been described. These and other examples are within the scope of the following claims.

## Claims

1. A vertical-takeoff and landing (VTOL) unmanned aerial vehicle (UAV) comprising:
a fuselage extending from a fore portion to an aft portion and defining an upper section and a lower section;
a first pair of airfoils fixedly attached to opposite sides of the fore portion of the fuselage;
a second pair of airfoils fixedly attached to opposite sides of the aft portion of the fuselage, wherein the first pair of fixed airfoils is offset relative to the second pair of fixed airfoils in the upper section-lower section direction;
a first plurality of rotors fixedly attached to the first pair of airfoils;
a second plurality of rotors fixedly attached to the second pair of airfoils; and
landing supports extending aft from the aft portion of the fuselage and an aft portion of the second pair of fixed airfoils, such that the fuselage rests with the fore-aft axis extending substantially vertically when resting on the landing supports prior to takeoff and after landing.

2. The UAV of claim 1, wherein the first pair of airfoils defines a first airfoil pair surface area different than a second airfoil pair surface area defined by the second pair of airfoils so that the first and second pairs of airfoils generate lift that urges the fore-aft axis of the UAV from the substantially vertical orientation during takeoff to a more horizontal orientation during flight.

3. The UAV of claim 2, wherein the first airfoil pair surface area is less than the second airfoil pair surface area, and wherein the second pair of fixed airfoils is offset towards the upper portion of the fuselage compared to the first pair of fixed airfoils.

4. The UAV of claim 2, wherein the first airfoil pair surface area is greater than the second airfoil pair surface area, and wherein the first pair of fixed airfoils is offset towards the upper portion of the fuselage compared to the second pair of fixed airfoils.

5. The UAV of claim 1, wherein the fuselage is a blade fuselage, and wherein the aft portion of the fuselage comprises an integral vertical stabilizer.

6. The UAV of claim 1, wherein the fuselage defines a first aft point at an upper-aft section of the fuselage and a second aft point at a lower-aft section of the fuselage, and wherein the landing supports comprise a first landing support attached to the first aft point and a second landing support attached to the second aft point.

7. The UAV of claim 1, wherein a center of gravity of the UAV is offset fore and toward the lower section from an aerodynamic center of the UAV.

8. The UAV of claim 1, further comprising a respective control surface on each airfoil of the first pair of airfoils or on each airfoil of the second pair of airfoils.

9. The UAV of claim 1, further comprising control electronics configured to control relative rotation rates of the first and second pluralities of rotors to control attitude of the UAV.

10. A method comprising:
causing, by flight control electronics, a first plurality of rotors and a second plurality of rotors to rotate and substantially the same rotational speed to cause a vertical-takeoff and landing (VTOL) unmanned aerial vehicle (UAV) to take off from a vertical orientation, wherein the VTOL UAV comprises:
a fuselage extending from a fore portion to an aft portion and defining an upper section and a lower section;
a first pair of airfoils fixedly attached to opposite sides of the fore portion of the fuselage;
a second pair of airfoils fixedly attached to opposite sides of the aft portion of the fuselage, wherein the first pair of fixed airfoils is offset relative to the second pair of fixed airfoils in the upper section-lower section direction;
the first plurality of rotors, wherein the first plurality of rotors are fixedly attached to the first pair of airfoils;
the second plurality of rotors, wherein the second plurality of rotors fixedly attached to the second pair of airfoils; and
landing supports extending aft from the aft portion of the fuselage and an aft portion of the second pair of fixed airfoils, such that the fuselage rests with the fore-aft axis extending substantially vertically when resting on the landing supports prior to takeoff and after landing; and
causing, by the flight control electronics, the second plurality of rotors to rotate faster than the first plurality of rotors to cause the VTOL UAV to transition to a horizontal flight orientation.

11. The method of claim 10, further comprising:
causing, by the flight control electronics, the first plurality of rotors to rotate faster than the second plurality of rotors to cause the VTOL UAV to convert to a vertical flight orientation.

12. The method of claim 10, wherein the first pair of airfoils defines a first airfoil pair surface area different than a second airfoil pair surface area defined by the second pair of airfoils so that the first and second pairs of airfoils generate lift that urges the fore-aft axis of the UAV from the substantially vertical orientation during takeoff to a more horizontal orientation during flight.

13. The method of claim 12, wherein the first airfoil pair surface area is less than the second airfoil pair surface area, and wherein the second pair of fixed airfoils is offset towards the upper portion of the fuselage compared to the first pair of fixed airfoils.

14. The method of claim 12, wherein the first airfoil pair surface area is greater than the second airfoil pair surface area, and wherein the first pair of fixed airfoils is offset towards the upper portion of the fuselage compared to the second pair of fixed airfoils.

15. The method of claim 10, further comprising a respective control surface on each airfoil of the first pair of airfoils or on each airfoil of the second pair of airfoils, wherein the flight control electronics cause the respective control surfaces to move to affect attitude of the VTOL UAV.
